# FASCICULE DE BREVET EUROPEEN

(11) **EP 3 788 274 B1**
(45) Date de publication et mention de la délivrance du brevet: **27.04.2022**
(21) Numéro de dépôt: 19730188.0
(22) Date de dépôt: 29.04.2019
(51) Int. Cl.: F16D 55/36, F16D 59/02, F16D 65/18

(54) **DISPOSITIF DE FREINAGE AMÉLIORÉ**
VERBESSERTE BREMSVORRICHTUNG
IMPROVED BRAKING DEVICE

(30) Priorité: 02.05.2018 FR 1800401
(43) Date de publication de la demande: 10.03.2021
(73) Titulaire: Poclain Hydraulics Industrie, 60410 Verberie (FR)
(72) Inventeur: GRILLON, Gilles, 60410 VERBERIE (FR); BONNARD, Loïc, 60410 VERBERIE (FR); COSTAZ, Dominique, 60410 VERBERIE (FR); ENGRAND, Julien, 60410 VERBERIE (FR); TELEGA, Philippe, 60410 VERBERIE (FR)
(74) Mandataire: Cabinet Beau de Loménie
(86) Numéro de dépôt international: PCT/FR2019/050997
(87) Numéro de publication internationale: WO 2019/211554

(56) Documents cités:
- FR-A1- 2 529 978
- FR-A1- 2 958 986
- GB-A- 2 117 465
- US-A1- 2006 249 338

## Description

### DOMAINE DE L'INVENTION

Le présent exposé concerne les machines hydrauliques, et plus particulièrement les dispositifs de freinage pour machines hydrauliques.

### ETAT DE LA TECHNIQUE ANTERIEURE

On connait les dispositifs de freinage pour machine hydrauliques comprenant un empilement de disques liés à deux éléments montés en rotation relative, par exemple la rotation relative entre un arbre et un carter, ainsi que des actionneurs visant à exercer ou relâcher un effort de serrage sur l'empilement de disques.

Le document FR 2958986 au nom de la demanderesse présente ainsi un exemple de dispositif de freinage pour machine hydraulique ayant un effet de multiplication d'effort. Toutefois, les systèmes connus ont tendance à ne pas réaliser une répartition suffisamment homogène de l'effort de serrage de frein, ce qui entraine dans certaines conditions la génération d'un couple trop important.

Le présent exposé vise ainsi à répondre au moins partiellement à cette problématique.

### PRESENTATION GENERALE

A cet effet, le présent exposé concerne un dispositif de freinage comprenant
- un arbre et un carter de frein monté en rotation relative par rapport à un arbre selon un axe de rotation,
- des premiers éléments de freinage, solidaires en rotation de l'arbre,
- des seconds éléments de freinage solidaires en rotation du carter de frein, adaptés pour coopérer avec les premiers éléments de freinage, les premiers éléments de freinage et les seconds éléments de freinage formant un empilement,
- un élément de rappel élastique, monté en appui sur le carter et configuré de manière à exercer un effort de serrage sur les premiers et seconds éléments de freinage selon un sens de serrage,
- un actionneur de défreinage, adapté pour solliciter l'élément de rappel élastique selon un sens antagoniste au sens de serrage,
caractérisé en ce que le dispositif de freinage comprend une cale de diffusion et une cale de pression positionnées respectivement en appui contre l'empilement et contre l'élément de rappel élastique,
la cale de diffusion et la cale de pression présentant des surfaces de contact définissant un contact linéaire annulaire entre la cale de diffusion et la cale de pression autour de l'axe de rotation.

Selon un exemple, l'une parmi la cale de diffusion et la cale de pression présente une surface de contact inclinée d'un angle β par rapport à l'axe de rotation, l'angle β étant compris entre 30° et 60°, et l'autre parmi la cale de diffusion et la cale de pression présente une surface de contact incurvée de manière à former le contact linéaire annulaire autour de l'axe de rotation.

L'angle β est alors typiquement compris entre 40° et 50°, ou encore égal à 45°.

Selon un exemple, la cale de diffusion et la cale de pression présentent des surfaces de guidage coopérant de manière à indexer la cale de diffusion et la cale de pression selon l'axe de rotation.

La cale de diffusion présente alors typiquement une portion de guidage comprenant une face externe cylindrique de révolution autour de l'axe de rotation, et dans lequel la cale de pression présente une portion d'indexation comprenant une face interne cylindrique de révolution autour de l'axe de rotation, la face externe de la cale de pression étant configurée de manière à être montée serrée autour de la portion de guidage de la cale de diffusion.

Le présent exposé concerne également une machine hydraulique comprenant un dispositif de freinage tel que défini précédemment.

Selon un exemple, la machine hydraulique comprend un bloc-cylindres présentant une pluralité de logements s'étendant radialement autour de l'axe de rotation, et dans lesquels coulissent des pistons, ainsi qu'une came multilobes disposée autour du bloc cylindres et un distributeur.

Selon un exemple, la rotation relative de l'arbre par rapport au carter est assurée par deux éléments de roulement, et dans laquelle le dispositif de freinage est positionné entre les deux éléments de roulement.

En variante, la rotation relative de l'arbre par rapport au carter est assurée par deux éléments de roulement, et dans laquelle le dispositif de freinage est positionné à une extrémité de la machine hydraulique selon l'axe de rotation, de sorte que les éléments de roulement soient positionnés entre le dispositif de freinage d'une part, et le bloc cylindres et le distributeur d'autre part.

Selon une autre variante, la rotation relative de l'arbre par rapport au carter est assurée par deux éléments de roulement, et dans laquelle le dispositif de freinage est positionné à une extrémité de la machine hydraulique selon l'axe de rotation, de sorte que le bloc cylindres et le distributeur soient positionnés entre les éléments de roulement et le dispositif de freinage.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente une vue en coupe d'un exemple de dispositif de freinage selon un aspect du présent exposé,
- la figure 2 est une vue détaillée d'une zone de la figure 1, et
- la figure 3 présente un exemple d'application d'un tel dispositif de freinage pour une machine hydraulique.

Sur l'ensemble des figures, les éléments en commun sont repérés par des références numériques identiques.

### DESCRIPTION DETAILLEE D'EXEMPLES DE REALISATION

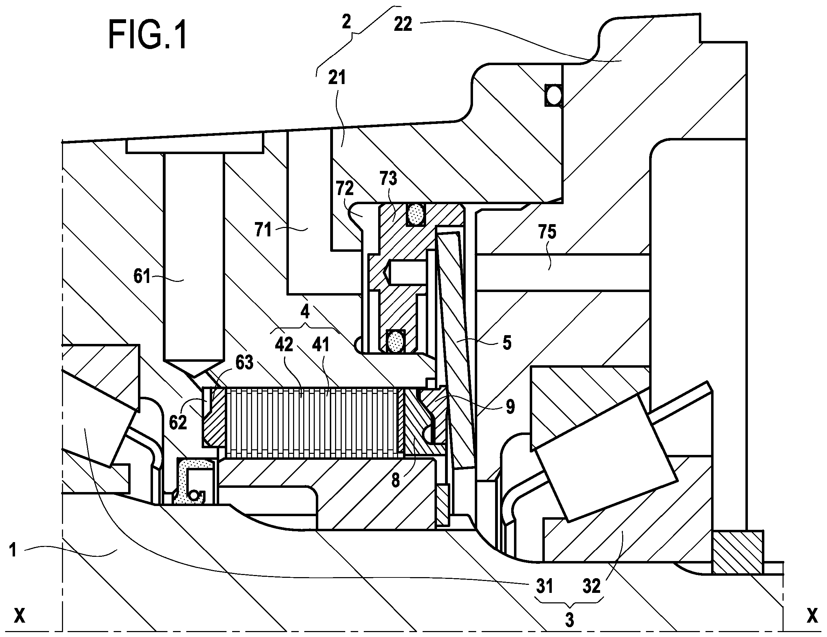

La figure 1 présente un exemple de dispositif de freinage tel que proposé.

Le dispositif de freinage est configuré de manière à permettre le freinage ou le défreinage d'un mouvement de rotation relative entre un arbre 1 et un carter 2 autour d'un axe de rotation X-X.

Dans l'exemple représenté, la rotation relative entre l'arbre 1 et le carter 2 est assurée par des éléments de roulement 3, comprenant ici deux roulements à rouleaux coniques 31 et 32, le dispositif de freinage étant ici intercalé entre ces deux roulements 31 et 32. On comprend cependant que cet exemple est uniquement illustratif, et que le dispositif de freinage pourra être placé librement par rapport aux éléments de roulement 3, ces derniers pouvant par ailleurs être de tout type dès lors qu'ils assurent un mouvement en rotation relative entre l'arbre 1 et le carter 2.

Dans le cas d'une application d'un tel dispositif de freinage pour une machine hydraulique, le dispositif de freinage peut par exemple être disposé à une extrémité de la machine hydraulique, par exemple au niveau du distributeur de la machine hydraulique, et non pas au niveau des éléments de roulement.

Le dispositif de freinage tel que représenté comprend un carter de frein, ici confondu avec le carter 2, composé de deux segments de carter 21 et 22, permettant de définir des chambres et conduits comme on le verra par la suite.

Le dispositif de freinage comprend également une pluralité de moyens de freinage, typiquement des disques de freinage. Plus précisément, le dispositif de freinage comprend ici des premiers éléments de freinage 41 solidaires en rotation de l'arbre 1, directement ou par une pièce intermédiaire liée à l'arbre comme représentée sur la figure 1, et des seconds éléments de freinage 42 solidaires en rotation du carter 2, les premiers et seconds éléments de freinage 41 et 42 formant ainsi un empilement 4 de disques de freinage s'étendant selon la direction définie par l'axe de rotation X-X.

De manière connue, les premiers et seconds éléments de freinage 41 et 42 sont configurés pour sélectivement venir au contact les uns des autres et ainsi réaliser un freinage du mouvement de rotation relative entre l'arbre 1 et le carter 2 du fait des frottements entre les premiers et seconds éléments de freinage 41 et 42, ou de se désengager afin de libérer ce mouvement en rotation. Typiquement, ces éléments de freinages 41 et 42 sont positionnés dans une enceinte pleine d'huile.

Un élément élastique 5, ici une rondelle ressort, est monté en appui contre le carter 2 (ici le segment de carter 22) de manière à venir exercer un effort de serrage sur l'empilement 4, de manière à ce que par défaut, le dispositif de freinage soit dans une configuration de freinage.

Le dispositif tel que présenté comprend en outre un conduit d'alimentation de freinage 61 aménagé dans le carter 2, relié à une chambre de freinage 62 dans laquelle est positionné un piston de freinage 63, configuré pour exercer un effort de serrage sur l'empilement 4. Le piston de freinage 63 réalise ici une fonction de frein dynamique, et applique donc un effort positif de freinage en fonction d'une commande. A titre de variante, ce montage peut former un frein ayant uniquement un rôle de frein statique ; le piston de freinage 63 forme une butée fixe pour l'empilement 4 de disques de freinage, et le conduit d'alimentation de freinage 61 forme un canal de drain ou d'évacuation d'un flux d'huile balayant le frein. La fonction de frein statique est réalisée par l'élément élastique 5.

Le dispositif de freinage tel que présenté sur la figure 1 est communément qualifié de frein « combiné », pouvant réaliser à la fois les fonctions de frein de parking et de frein dynamique. En effet, lorsque le véhicule est à l'arrêt, la pression est nulle dans les chambres 62 et 72 ; l'élément élastique 5 assure alors un serrage de l'empilement 4, réalisant une fonction de frein de parking. En fonctionnement, une pression est appliquée au sein de la chambre de défreinage 72, de manière à relâcher l'effort de pression appliqué par l'élément élastique 5 sur l'empilement 4, et relâchant donc le frein de parking. La fonction de freinage dynamique est quant à elle réalisée par application d'une pression au sein de la chambre de freinage 62. En variante, le piston de freinage 63 ainsi que la chambre de freinage 62 et le conduit d'alimentation de freinage 61 sont supprimés, et le freinage dynamique est réalisé par d'autres moyens de freinage non représentés, ou par freinage hydrostatique.

Le dispositif comprend également un piston de défreinage 73 positionné dans une chambre de défreinage 72, alimentée par un conduit de défreinage 71 formé dans le carter 2. Le piston de défreinage 73 est monté mobile de manière à venir exercer un effort de compression sur l'élément élastique 5 tendant à s'opposer à l'effort de serrage qu'il exerce sur l'empilement 4, et permettant donc de désengager les éléments de freinage 41 et 42 de l'empilement 4 en diminuant ou supprimant l'effort de serrage appliqué sur l'empilement 4 par l'élément élastique 5. Un canal de drain 75 est aménagé dans l'élément de carter 22, permettant une décharge de la pression au sein du volume dans lequel est disposé l'élément élastique 5.

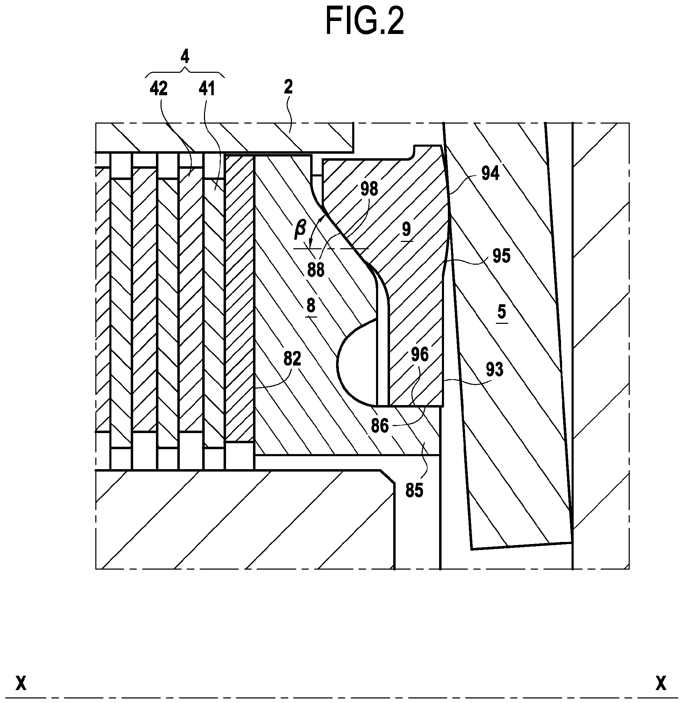

Dans le dispositif tel que présenté, le contact entre l'élément élastique 5 et l'empilement 4 est réalisé au moyen d'une cale de diffusion 8 et d'une cale de pression 9 que l'on décrit ci-après. La figure 2 présente une vue détaillée de ces éléments.

La cale de diffusion 8 présente une forme générale d'anneau autour de l'axe de rotation X-X. Dans l'exemple représenté, la cale de diffusion présente une périphérie externe définissant une surface de contact avec le carter 2, de sorte que la cale de diffusion 8 soit montée coulissante selon l'axe X-X par rapport au carter 2.

La cale de diffusion 8 est positionnée en appui contre l'empilement 4 via une face proximale 82. Cette face proximale est typiquement plane, de manière à exercer un appui plan selon une surface de contact annulaire autour de l'axe de rotation X-X sur l'empilement 4.

La cale de pression 9 est montée en appui contre le cale de diffusion 8 d'une part, et contre l'élément élastique 5 d'autre part.

Dans l'exemple représenté, la cale de pression 9 est en appui contre l'élément élastique 5 via une face distale 93. Cette face distale présente typiquement une portion incurvée 94 convexe présentant un rayon de courbure élevé, de manière à assurer une bonne transmission des efforts entre l'élément élastique 5 et la cale de pression 9.

La cale de pression 9 est typiquement montée serrée par rapport à la cale de diffusion 8. Plus précisément, la cale de pression 9 et la cale de diffusion 8 sont montées l'une par rapport à l'autre avec un ajustement serré, de manière à prévenir tout mouvement relatif de l'une par rapport à l'autre. Cet ajustement est ici réalisé au moyen de portions de guidage que l'on décrit ci-après. La cale de diffusion 8 comprend une portion de guidage 85 s'étendant selon l'axe X-X, présentant une face externe 86 cylindrique de révolution autour de l'axe X-X. La cale de pression 9 présente quant à elle une face interne 96 cylindrique de révolution autour de l'axe X-X définissant une portion de guidage, et est montée serrée autour de la portion de guidage 85 de la cale de diffusion 8. De telles portions de guidage permettent notamment de réaliser un montage serré tout en assurant une coaxialité de la cale de diffusion 8 et de la cale de pression 9. Ce montage serré permet également de faciliter le montage de l'ensemble du dispositif de freinage dans une machine hydraulique.

En variante, la cale de pression 9 peut être montée mobile en translation selon l'axe X-X. La portion de guidage 85 de la cale de diffusion et la face interne 96 de la cale de pression 9 permettent alors un coulissement selon l'axe X-X, et réalisent une indexation de l'inclinaison relative de la cale de diffusion 8 et de la cale de pression 9 par rapport à l'axe X-X. La face interne 96 de la cale de pression 9 présente alors typiquement un diamètre très légèrement supérieur au diamètre de la face externe 86 de la portion de guidage 85 de la cale de diffusion 8, afin de définir un contact glissant en translation selon l'axe X-X. Les portions d'indexation de la cale de diffusion 8 et de la cale de pression 9 permettent ainsi d'éviter une inclinaison non souhaitée par rapport à l'axe X-X de ces deux cales 8 et 9 d'une par rapport à l'autre. Le maintien en contact axial de la cale de diffusion 8 et de la cale de pression 9 est assuré par l'effort de pression exercé par la rondelle 5. La longueur de la portion de guidage 85 est telle que la cale de pression 9 peut se loger axialement quasiment intégralement autour de la portion de guidage 85, ce qui permet d'obtenir une compacité du système.

La cale de pression 9 et la cale de diffusion 8 sont en contact selon la direction axiale via deux surfaces de contact, respectivement 98 et 88. La surface de contact 88 de la cale de diffusion 8 et la surface de contact 98 de la cale de pression 9 définissent un contact linéaire annulaire autour de l'axe de rotation X-X.

Plus précisément, la surface de contact 88 de la cale de diffusion 8 forme typiquement un tronc de cône d'angle β par rapport à l'axe de rotation X-X, l'angle β étant compris entre 30° et 60°, ou plus précisément entre 40° et 50°, ou encore plus précisément égal à 45°. La surface de contact 98 de la cale de pression 9 présente quant à elle une légère courbure, de manière à être légèrement bombée. Le contact entre la surface de contact 98 bombée et la surface de contact 88 plane est donc du type linéaire annulaire autour de l'axe de rotation X-X. En variante, la surface de contact 88 peut être bombée, et la surface de contact 98 plane, l'appui linéaire annulaire autour de l'axe de rotation X-X étant alors assuré.

Une telle configuration présente plusieurs avantages par rapport aux montages connus.

En effet, dans les montages connus, la transmission d'efforts entre la rondelle 5 et l'empilement 4 est communément réalisé au moyen d'une cale monobloc positionnée à la périphérie externe de l'empilement 4. Or, la demanderesse a pu constater qu'une telle configuration entraine une concentration des efforts dans l'empilement 4, et peut entrainer des effets de bord.

Le dispositif de freinage tel que proposé permet de s'affranchir de ces effets. En effet, l'appui linéaire entre la surface de contact 88 de la cale de diffusion 8 et la surface de contact 98 de la cale de pression 9 permet d'optimiser la diffusion de l'effort exercé par la cale de pression 9 sur la cale de diffusion 8, et ainsi de le répartir sur toute la surface de contact avec l'empilement 4.

Par ailleurs, l'inclinaison d'angle β de la surface de contact 88 plane (ou alternativement de la surface de contact 98) entre la cale de diffusion 8 et la cale de pression 9 permet de diminuer le moment de flexion dans la cale de pression 9, et d'augmenter la longueur de diffusion de l'effort dans la cale de diffusion 8 préalablement à la transmission de cet effort à l'empilement 4.

La cale de pression 9 peut se déformer sous l'effort de pression, principalement l'effort de flexion, tandis que la cale de diffusion 8 est réalisée de manière à être plus massive, de manière à présenter une déformation moindre et ainsi permettre de transmettre l'effort. Une telle configuration présente par ailleurs un encombrement axial et radial limité. Par ailleurs, la structure proposée assurant un contact linéaire annulaire entre la cale de pression 8 et la cale de diffusion 9 permet de conserver un même contact quels que soient l'effort et la déformation auxquels est soumise la cale de pression 8.

La demanderesse a ainsi pu constater que les effets de bords sont supprimés, et que le système proposé permet d'obtenir une meilleure homogénéisation des efforts transmis à l'empilement 4, notamment lorsque l'effort presseur est excentré par rapport au rayon moyen de l'empilement 4.

La pression de contact dans l'empilement 4 est ainsi mieux répartie sur l'ensemble du rayon de l'empilement 4, et les phénomènes de surpression locale sont fortement réduits. A titre de comparaison, la modification de la structure de la cale permet pour un même système de réduire la pression de contact maximale dans l'empilement 4 de 42MPa à 29MPa, les autres éléments du système demeurant inchangés.

De manière avantageuse, la portion incurvée 94 ne se situe pas au niveau du rayon moyen de l'empilement 4. Il existe ainsi un décalage radial entre le contact entre la rondelle 5 et la portion incurvée 94, correspondant au point d'application de l'effort presseur, et le contact linéaire annulaire entre la surface de contact 88 de la cale de diffusion 8 et la surface de contact 98 et de la cale de pression 9.

De manière avantageuse, la normale au plan incliné d'angle β au point de contact entre la cale de pression 9 et la cale de diffusion 8 croise ou avoisine le rayon moyen de l'empilement 4 au niveau de l'interface entre l'empilement 4 et la cale de diffusion 8, ce qui permet d'améliorer la répartition des efforts au sein de l'empilement 4.

Le dispositif de freinage tel que présenté trouve notamment application pour une machine hydraulique telle qu'une pompe hydraulique ou un moteur hydraulique, pouvant être du type à pistons axiaux ou pistons radiaux et came multilobes. La machine hydraulique peut être une machine hydraulique à arbre tournant et carter fixe, ou à arbre fixe et carter tournant.

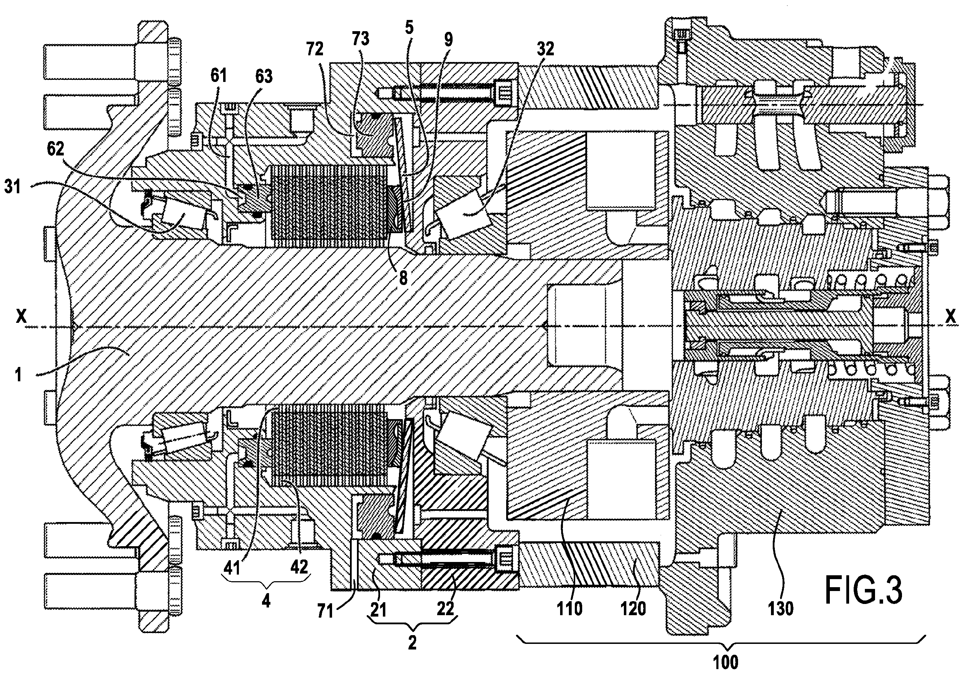

La figure 3 présente un exemple d'application d'un tel dispositif de freinage pour une machine hydraulique à pistons radiaux, formant ici une fusée de roue de véhicule.

On représente ainsi sur la figure 3 une machine hydraulique à pistons radiaux 100 comprenant un arbre 1, un bloc cylindres 110 présentant une pluralité de logements dans lesquels sont montés coulissant des pistons et autour duquel est positionnée une came multilobes 120, et un distributeur 130 ici positionné à une extrémité de l'arbre 1 et assurant une distribution de fluide dans les logements du bloc cylindres 110. Le fonctionnement d'une telle machine hydraulique est bien connu et ne sera pas décrit en détail ici. Le dispositif de freinage est ici à nouveau positionné entre les éléments de roulement 31 et 32. On comprend cependant que l'emplacement du dispositif de freinage peut être modifié ; la machine hydraulique 100 peut être positionnée entre les éléments de roulement, et le dispositif de freinage peut alors être positionné à une extrémité de l'arbre 1. En variante, la machine hydraulique 100 ainsi que le dispositif de freinage peuvent être disposés entre les éléments de roulement 3, ou de manière alternative, la machine hydraulique 100 ainsi que le dispositif de freinage peuvent être disposés de part et d'autre ou d'un même côté par rapport aux éléments de roulement 3, le dispositif de freinage pouvant par exemple être positionné dans le prolongement de la machine hydraulique 100 par rapport à l'axe de rotation X-X.

On remarque par ailleurs ici que les premiers éléments de freinage 41 sont ici directement montés autour de l'arbre 1, contrairement au mode de réalisation représenté précédemment dans lequel une pièce intermédiaire assure la liaison entre les premiers éléments de freinage 41 et l'arbre 1.

Le dispositif de freinage tel que présenté peut réaliser une fonction de frein de parking pour un véhicule un frein de service, un frein d'urgence ou de secours, ou encore une fonction combiné de frein de service et frein de parking.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Dispositif de freinage comprenant
- un arbre (1) et un carter (2) de frein monté en rotation relative par rapport à l'arbre (1) selon un axe de rotation (X-X),
- des premiers éléments de freinage (41), solidaires en rotation de l'arbre (1),
- des seconds éléments de freinage (42) solidaires en rotation du carter (2) de frein, adaptés pour coopérer avec les premiers éléments de freinage (41), les premiers éléments de freinage et les seconds éléments de freinage formant un empilement (4),
- un élément de rappel élastique (5), monté en appui sur le carter (2) et configuré de manière à exercer un effort de serrage sur les premiers et seconds éléments de freinage (41, 42) selon un sens de serrage,
- un actionneur de défreinage (73), adapté pour solliciter l'élément de rappel élastique (5) selon un sens antagoniste au sens de serrage, **caractérisé en ce que** le dispositif de freinage comprend une cale de diffusion (8) et une cale de pression (9) positionnées respectivement en appui contre l'empilement (4) et contre l'élément de rappel élastique (5), la cale de diffusion (8) et la cale de pression (9) présentant des surfaces de contact (88, 98) définissant un contact linéaire annulaire entre la cale de diffusion (8) et la cale de pression (9) autour de l'axe de rotation (X-X).

2. Dispositif de freinage selon la revendication 1, dans lequel l'une parmi la cale de diffusion (8) et la cale de pression (9) présente une surface de contact (88, 98) inclinée d'un angle β par rapport à l'axe de rotation (X-X), l'angle β étant compris entre 30° et 60°, et l'autre parmi la cale de diffusion (8) et la cale de pression (9) présente une surface de contact (98, 88) incurvée de manière à former le contact linéaire annulaire autour de l'axe de rotation (X-X).

3. Dispositif de freinage selon la revendication 2, dans lequel l'angle β est compris entre 40 et 50°.

4. Dispositif de freinage selon la revendication 3, dans lequel l'angle β est égal à 45°.

5. Dispositif de freinage selon l'une des revendications 1 à 4, dans lequel la cale de diffusion (8) et la cale de pression (9) présentent des surfaces de guidage (86, 96) coopérant de manière à indexer la cale de diffusion (8) et la cale de pression (9) selon l'axe de rotation (X-X).

6. Dispositif de freinage selon la revendication 5, dans lequel la cale de diffusion (8) présente une portion de guidage (85) comprenant une face externe (86) cylindrique de révolution autour de l'axe de rotation (X-X), et dans lequel la cale de pression (9) présente une portion d'indexation comprenant une face interne (96) cylindrique de révolution autour de l'axe de rotation (X-X), la face externe (96) de la cale de pression (9) étant configurée de manière à être montée serrée autour de la portion de guidage (86) de la cale de diffusion (8).

7. Machine hydraulique (100) comprenant un dispositif de freinage selon l'une des revendications 1 à 6.

8. Machine hydraulique (100) selon la revendication 7, comprenant un bloc-cylindres (110) présentant une pluralité de logements s'étendant radialement autour de l'axe de rotation (X-X), et dans lesquels coulissent des pistons, ainsi qu'une came multilobes (120) disposée autour du bloc cylindres (110) et un distributeur (130).

9. Machine hydraulique (100) selon l'une des revendications 7 ou 8, dans laquelle la rotation relative de l'arbre (1) par rapport au carter (2) est assurée par deux éléments de roulement (31, 32), et dans laquelle le dispositif de freinage est positionné entre les deux éléments de roulement (31, 32).

10. Machine hydraulique (100) selon l'une des revendications 7 ou 8, dans laquelle la rotation relative de l'arbre (1) par rapport au carter (2) est assurée par deux éléments de roulement (31, 32), et dans laquelle le dispositif de freinage est positionné à une extrémité de la machine hydraulique (100) selon l'axe de rotation (X-X), de sorte que les éléments de roulement (31, 32) soient positionnés entre le dispositif de freinage d'une part, et le bloc cylindres (110) et le distributeur (130) d'autre part.

11. Machine hydraulique (100) selon l'une des revendications 7 ou 8, dans laquelle la rotation relative de l'arbre (1) par rapport au carter (2) est assurée par deux éléments de roulement (31, 32), et dans laquelle le dispositif de freinage est positionné à une extrémité de la machine hydraulique (100) selon l'axe de rotation (X-X), de sorte que le bloc cylindres (110) et le distributeur (130) soient positionnés entre les éléments de roulement (31, 32) et le dispositif de freinage.

## Patentansprüche

1. Bremsvorrichtung, umfassend
- eine Welle (1) und ein Bremsgehäuse (2), das in Bezug auf die Welle (1) entlang einer Drehachse (X-X) drehbar gelagert ist,
- erste Bremselemente (41), die mit der Welle (1) drehfest sind,
- zweite Bremselemente (42), die mit dem Bremsgehäuse (2) drehfest und angepasst sind, um mit den ersten Bremselementen (41) zusammenzuwirken, wobei die ersten Bremselemente und die zweiten Bremselemente einen Stapel (4) bilden,
- ein elastisches Rückstellelement (5), das anliegend an dem Gehäuse (2) montiert und dazu ausgestaltet ist, eine Spannkraft auf die ersten und zweiten Bremselemente (41, 42) entlang einer Spannrichtung auszuüben,
- ein Bremslösestellglied (73), das angepasst ist, um das elastische Rückstellelement (5) entlang einer entgegengesetzten Richtung zur Spannrichtung zu belasten,
**dadurch gekennzeichnet, dass** die Bremsvorrichtung einen Diffusionskeil (8) und einen Druckkeil (9) umfasst, die anliegend an dem Stapel (4) bzw. dem elastischen Rückstellelement (5) positioniert sind,
wobei der Diffusionskeil (8) und der Druckkeil (9) Kontaktflächen (88, 98) aufweisen, die einen linearen ringförmigen Kontakt zwischen dem Diffusionskeil (8) und dem Druckkeil (9) um die Drehachse (X-X) definieren.

2. Bremsvorrichtung nach Anspruch 1, wobei einer von dem Diffusionskeil (8) und dem Druckkeil (9) eine Kontaktfläche (88, 98) aufweist, die in einem Winkel β in Bezug auf die Drehachse (X-X) geneigt ist, wobei der Winkel β zwischen 30° und 60° liegt, und der andere von dem Diffusionskeil (8) und dem Druckkeil (9) eine Kontaktfläche (98, 88) aufweist, die gekrümmt ist, um den linearen ringförmigen Kontakt um die Drehachse (X-X) zu bilden.

3. Bremsvorrichtung nach Anspruch 2, wobei der Winkel β zwischen 40 und 50° liegt.

4. Bremsvorrichtung nach Anspruch 3, wobei der Winkel β 45° entspricht.

5. Bremsvorrichtung nach einem der Ansprüche 1 bis 4, wobei der Diffusionskeil (8) und der Druckkeil (9) Führungsflächen (86, 96) aufweisen, die zusammenwirken, um den Diffusionskeil (8) und den Druckkeil (9) entlang der Drehachse (X-X) zu indizieren.

6. Bremsvorrichtung nach Anspruch 5, wobei der Diffusionskeil (8) einen Führungsabschnitt (85) aufweist, der eine zylindrische Außenseite (86) zur Drehung um die Drehachse (X-X) umfasst, und wobei der Druckkeil (9) einen Indexabschnitt aufweist, der eine zylindrische Innenseite (96) zur Drehung um die Drehachse (X-X) umfasst, wobei die Außenseite (86) des Druckkeils (9) dazu ausgestaltet ist, festgezogen um den Führungsabschnitt (86) des Diffusionskeils (8) montiert zu sein.

7. Hydraulische Maschine (100), umfassend eine Bremsvorrichtung nach einem der Ansprüche 1 bis 6.

8. Hydraulische Maschine (100) nach Anspruch 7, umfassend einen Zylinderblock (110), der mehrere Sitze aufweist, die sich radial um die Drehachse (X-X) erstrecken, und worin sich Kolben hin- und herbewegen, sowie einen Nocken (120) mit mehreren Buckeln, der um den Zylinderblock (110) herum angeordnet ist, und einen Verteiler (130).

9. Hydraulische Maschine (100) nach einem der Ansprüche 7 bis 8, wobei die relative Drehung der Welle (1) in Bezug auf das Gehäuse (2) durch zwei Wälzelemente (31, 32) gewährleistet wird, und wobei die Bremsvorrichtung zwischen den zwei Wälzelementen (31, 32) positioniert ist.

10. Hydraulische Maschine (100) nach einem der Ansprüche 7 oder 8, wobei die relative Drehung der Welle (1) in Bezug auf das Gehäuse (2) durch zwei Wälzelemente (31, 32) gewährleistet wird, und wobei die Bremsvorrichtung an einem Ende der hydraulischen Maschine (100) entlang der Drehachse (X-X) positioniert ist, sodass die Wälzelemente (31, 32) einerseits zwischen der Bremsvorrichtung und andererseits dem Zylinderblock (110) sowie dem Verteiler (130) positioniert sind.

11. Hydraulische Maschine (100) nach einem der Ansprüche 7 oder 8, wobei die relative Drehung der Welle (1) in Bezug auf das Gehäuse (2) durch zwei Wälzelemente (31, 32) gewährleistet wird, und wobei die Bremsvorrichtung an einem Ende der hydraulischen Maschine (100) entlang der Drehachse (X-X) positioniert ist, sodass der Zylinderblock (110) und der Verteiler (130) zwischen den Wälzelementen (31, 32) und der Bremsvorrichtung positioniert sind.

## Claims

1. A braking device comprising:
- a shaft (1) and a brake casing (2) assembled in relative rotation with respect to the shaft (1) along an axis of rotation (X-X),
- first braking elements (41), secured in rotation to the shaft (4),
- second braking elements (42) secured in rotation to the brake casing (2), adapted to cooperate with the first braking elements (41), the first braking elements and the second braking elements forming a stack (4),
- an elastic return element (5), assembled to bear on the casing (2) and configured so as to exert an application force on the first and second braking elements (41, 42) along an application direction,
- a brake release actuator (73), adapted to bias the elastic return element (5) along a direction opposing the application direction,
**characterized in that** the braking device comprises a diffusion wedge (8) and a pressure wedge (9) positioned respectively to bear against the stack (4) and against the elastic return element (5),
the diffusion wedge (8) and the pressure wedge (9) having contact surfaces (88, 98) defining an annular linear contact between the diffusion wedge (8) and the pressure wedge (9) about the axis of rotation (X-X).

2. The braking device according to claim 1, wherein one among the diffusion wedge (8) and the pressure wedge (9) has a contact surface (88, 98) inclined at an angle β with respect to the axis of rotation (X-X), the angle β being comprised between 30° and 60°, and the other among diffusion wedge (8) and of the pressure wedge (9) has a curved contact surface (98, 88) so as to form the annular linear contact about the axis of rotation (X-X).

3. The braking device according to claim 2, wherein the angle β is comprised between 40° and 50°.

4. The braking device according to claim 3, wherein the angle β is equal to 45°.

5. The braking device according to any of claims 1 to 4, wherein the diffusion wedge (8) and the pressure wedge (9) have guide surfaces (86, 96) cooperating so as to index the diffusion wedge (8) and the pressure wedge (9) along the axis of rotation (X-X).

6. The braking device according to claim 5, wherein the diffusion wedge (8) has a guide portion (85) comprising an outer face (86) cylindrical of revolution about the axis of rotation (X-X), and wherein the pressure wedge (9) has an indexing portion comprising an inner face (96) cylindrical of revolution about the axis of rotation (X-X), the outer face (96) of the pressure wedge (9) being configured so as to be tightly assembled around the guide portion (86) of the diffusion wedge (8).

7. A hydraulic machine (100) comprising a braking device according to any of claims 1 to 6.

8. The hydraulic machine (100) according to claim 7, comprising a cylinder block (110) having a plurality of housings extending radially about the axis of rotation (X-X), and in which pistons slide, as well as a multi-lobe cam (120) disposed around the cylinder block (110) and a distributor (130).

9. The hydraulic machine (100) according to any of claims 7 or 8, wherein the relative rotation of the shaft (1) with respect to the casing (2) is ensured by two rolling elements (31, 32), and wherein the braking device is positioned between the two rolling elements (31, 32).

10. The hydraulic machine (100) according to any of claims 7 or 8, wherein the relative rotation of the shaft (1) with respect to the casing (2) is ensured by two rolling elements (31, 32), and wherein the braking device is positioned at one end of the hydraulic machine (100) along the axis of rotation (X-X), so that the rolling elements (31, 32) are positioned between the braking device on the one hand, and the cylinder block (110) and the distributor (130) on the other hand.

11. The hydraulic machine (100) according to any of claims 7 or 8, wherein the relative rotation of the shaft (1) with respect to the casing (2) is ensured by two rolling elements (31, 32), and wherein the braking device is positioned at one end of the hydraulic machine (100) along the axis of rotation (X-X), so that the cylinder block (110) and the distributor (130) are positioned between the rolling elements (31, 32) and the braking device.
